**Europäisches Patentamt**

(19) **European Patent Office**

**Office européen des brevets**

(11) Veröffentlichungsnummer: **0 169 941**
**B1**

(12) **EUROPÄISCHE PATENTSCHRIFT**

(45) Veröffentlichungstag der Patentschrift:
**18.10.89**

(51) Int. Cl.⁴: **H 01 L 23/56,** G 11 C 7/00

(21) Anmeldenummer: **84115850.4**

(22) Anmeldetag: **19.12.84**

(54) Monolithisch integrierte Halbleiterschaltung.

(30) Priorität: **31.07.84 DE 3428235**

(43) Veröffentlichungstag der Anmeldung:
**05.02.86 Patentblatt 86/6**

(45) Bekanntmachung des Hinweises auf die Patenterteilung:
**18.10.89 Patentblatt 89/42**

(84) Benannte Vertragsstaaten:
**AT CH DE FR GB IT LI NL SE**

(56) Entgegenhaltungen:
**EP-A- 0 085 117**
**WO-A-82/04161**
**FR-A- 2 471 051**
**GB-A- 1 251 456**

(73) Patentinhaber: **Siemens Aktiengesellschaft,
Wittelsbacherplatz 2, D-8000 München 2 (DE)**

(72) Erfinder: **Schrenk, Hartmut, Dr., Fasanenweg 22,
D-8013 Haar (DE)**

ACTORUM AG

## Beschreibung

Die Erfindung betrifft eine monolithisch integrierte Halbleiterschaltung, wie sie im Oberbegriff des Anspruchs 1 beschrieben ist.

Bekanntlich werden MOS-Schaltungen in mehreren Verfahrensschritten hergestellt, in welchen das verwendete Hableitersubstrat auf die gewünschte Weise strukturiert wird. Umgekehrt kann durch Analyse der Struktur die Funktion und Eigenschaft der Schaltung ermittelt werden. Mit Hilfe eines Lichtmikroskops ist es möglich, eine lichtoptische Analyse durchzuführen. Auf diese Weise kann beispielsweise auch die in einem ROM gespeicherte Information bekannt werden.

Aus der FR-A 2 471 051 ist eine Schaltungsanordnung bekannt, in der als Schutz gegen die Bestimmung des Verlaufs von Leiterbahnen mit Hilfe eines Rasterelektronen-Mikroskops leitfähige Filme vorgesehen sind, die entweder nicht mit Leiterbahnbereichen interferieren oder aber Leiterbahnen durch Metallflächen ersetzen. Die Filme befinden sich auf gleichem oder tieferen Niveau wie die Leiterbahnen.

Bei elektrisch programmierbaren Speichern (E² PROMs) kann der Speicherinhalt einer elektrischen Analyse unterzogen werden, beispielsweise durch Abtastung des Ladungszustandes des Potentialkontrastes. Eine indirekte Analyse durch Rückwirkung des Speicherzustandes auf die notwendigerweise mit dem Speicher verschaltete Peripherielogik ist ebenfalls nicht auszuschliessen. Ein Beispiel dafür ist die Messung des Potentials auf den Spaltenleitungen nach Einstellung einer Speicheradresse. Derartige Messungen setzen allerdings voraus, dass die Oberfläche vollständig offenliegt und elektrooptisch abgetastet werden kann. Es gibt jedoch Anwendungsfälle für integrierte Schaltungen, insbesondere für Speicherschaltungen, in welchen eine Analyse der Schaltung und des Speicherinhalts für Unberechtigte verhindert werden muss. Anwendungsbeispiele dafür sind Sicherheits- und Zugriffssysteme, Abrechnungs- und Registriersysteme und Debit- oder Kreditsysteme, bei welchem sog. Chipkarten eingesetzt werden. Auf jeder Karte sind dabei Daten gespeichert, die vor jeder Anwendung der Karte geprüft werden und die einen Missbrauch der Karte verhindern sollen. Ferner kann jeder Chip mit einer speziellen Sicherheitslogik versehen sein, welche die Auslöseschaltung des Speichers sperren oder aber das Auslesen von einer Freigabeprozedur abhängig machen soll. Die Möglichkeit einer Analyse der Schaltung oder des Speicherinhalts in betrügerischer Absicht kann daher die Zuverlässigkeit des betreffenden Systems gefährden.

Der Erfindung lag daher die Aufgabe zugrunde, eine integrierte Schaltung der o.g. Art anzugeben, mit welcher eine elektrische Analyse der Schaltung und des Schaltungszustandes verhindert wird.

Diese Aufgabe wird mit den Merkmalen gelöst, die im kennzeichnenden Teil des Anspruchs 1 beschrieben sind. Weitere Ausgestaltungen der Erfindung ergeben sich aus den Unteransprüchen.

Im folgenden wird die Erfindung anhand eines Ausführungsbeispieles weiter beschrieben.

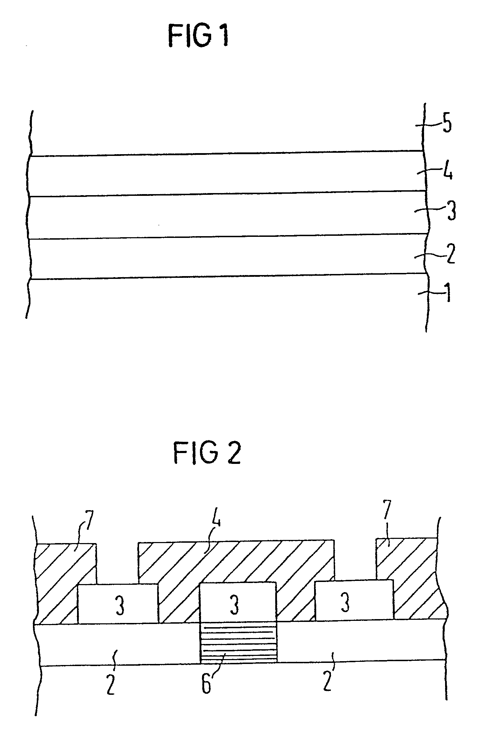

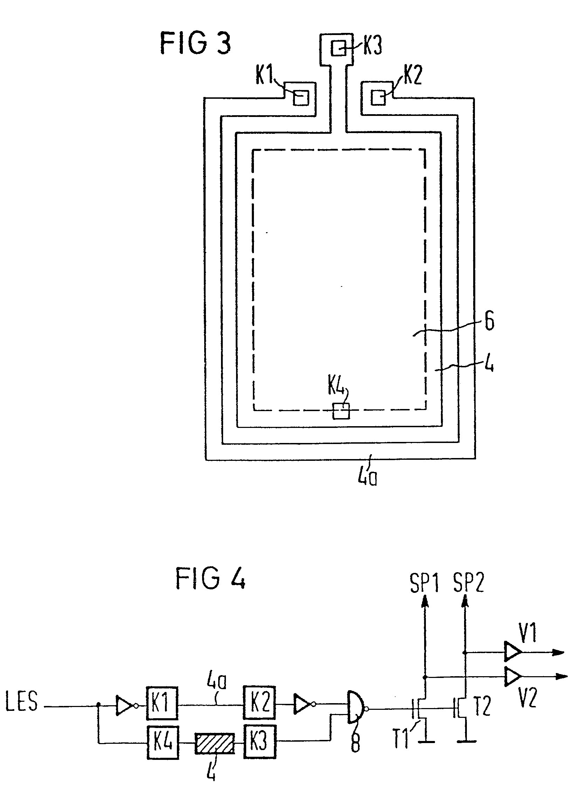

Fig. 1 und 2 zeigen jeweils eine Schnittzeichnung durch eine schematisierte integrierte Schaltung, Fig. 3, 4 zeigen ein Anwendungsbeispiel.

In Fig. 1 ist der Aufbau einer integrierten MOS-Schaltung in Silikon-Gate-Technik wiedergegeben. Ein Siliciumkristall 1 von einigen 100 µm Dikke dient als mechanischer Träger. Auf seiner Oberfläche liegen in einigen nur wenigen Mikrometer dicken aktiven Zone 2 die elektrisch wichtigen Strukturen wie Transistoren, Kapazitäten, Widerstände und Leiterbahnen, z.B. aus Aluminium oder Polysilicium. Nach oben ist der aktive Bereich mechanisch und elektrisch durch eine elektrisch isolierende Passivierungsschicht 3 geschützt, die beispielsweise aus Siliciumnitrid bestehen kann. Darüber liegt die erfindungsgemässe Schutzschicht 4. Schliesslich wird die Schaltung vollständig von einem Gehäusematerial 5 umgeben. Die Schutzschicht 4 schirmt als Equipotentialfläche die darunterliegenden Schaltungsteile in der aktiven Schicht 2 gegen jegliche elektrische Analyse ab. Da sie fest mit den darunterliegenden Schichten verbunden ist, hat eine Entfernung eine Zerstörung der elektrischen Funktion der Schaltung zu Folge. Insbesondere kann damit eine Beschädigung oder Zerstörung der äusseren Kontakte verbunden sein (nicht dargestellt).

Fig. 2, 3 und 4 zeigen eine Ausführungsform der Erfindung, bei welcher die Schutzschicht 4, 4a als aktive Leiterbahn in eine Sicherheitslogik mit einbezogen ist. Eine Beseitigung der Schutzschicht 4, 4a unterbricht die Funktion der Schaltung in dem darunterliegenden geschützten Bereich 6.

Eine entsprechende Anordnung ist durch ein Verfahren herstellbar, das als «Höckertechnik» für die Montage von integrierten Schaltkreisen auf Substraten oder Film bekannt ist. Mit diesen Höckern werden z.B. Chips direkt auf die Unterlage gelötet. Mit den Arbeitsgängen der Höckerstellung wird nun auch die Schutzschicht 4, die in diesem Beispiel aus Kupfer und weiteren Metallschichten besteht, aufgebracht, durch die Höckertechnik isoliert und entsprechend der gewünschten Anordnung der darunterliegenden und zu schützenden Schaltungen strukturiert. Die bei der Höckerherstellung benötigte Phototechnik zum Ätzen der Kontaktfenster in die Passivierungsschicht lässt sich ebenfalls anwenden.

Während Fig. 2 einen Querschnitt durch eine erfindungsgemäss strukturierte Schaltung zeigt, ist in Fig. 3 schematisch eine Oberfläche einer Schaltung wiedergegeben. Mit K1, K2, K3, K4 sind Durchkontaktierungen durch die Passivierungsschicht bezeichnet.

Aus Fig. 4 ist beispielhaft die Einbeziehung von Schutzschichten 4, 4a in eine Schaltungsanordnung einer sogenannten Sicherheitslogik entnehmbar. Die Leitungen SP1, SP2 stellen nun beispielhaft die gegen ein unbefugtes Auslesen zu schützenden, inneren Spaltenleitungen eines Speicherfeldes mit zwei Ausleseverstärkern V1, V2 dar. Bei einem berechtigten Zugriff auf das Speicherfeld werden zwei in den Spaltenleitungen SP1, SP2 liegenden Transistoren T1, T2 über ein Steuersignal LES gesperrt. Ist dies nicht der Fall, so liegen beide Spaltenleitungen fest auf log. Null."

Die erfindungsgemässe Schutzschicht ist in die Übertragung dieses Steuersignals LES an die Transistoren T1, T2 eingebunden, wobei die zwischen den Durchkontaktierungen K4 und K3 liegende Schutzschicht 4 das zu schützende Speicherfeld abdeckt. Die als Leiterbahn zwischen den Durchkontaktierungen K1 und K2 liegende weitere Schutzschicht 4a, welche mit dem invertierten Steuersignal LES beaufschlagt ist, ist eine zusätzliche Schutzmassnahme gegen Versuche, die Schutzschicht 4 selektiv in unberechtigter Weise zu entfernen, beispielsweise durch Abätzen. Jede Unterbrechung der Schutzschichten 4, 4a führt wegen eines logischen Gatters 8 (NAND-Gatter), welchem die beiden Verbindungen zugeführt sind, zu einem Durchschalten der beiden Transistoren T1 und T2.

Wie Fig. 3 zeigt, liegen die Durchkontaktierungen K1, K2 und K3 geometrisch so dicht zusammen, dass beispielsweise eine Kontaktierung mit Messspitzen nach einem Ätzversuch erschwert wird. Sobald die beiden Schutzschichten 4, 4a elektrische Berührung aufweisen, sind ebenfalls wegen des nachgeschalteten logischen Gatters die Transistoren T1, T2 leitend.

## Patentansprüche

1. Monolithisch integrierte Halbleiterschaltung mit einem Siliciumsubstrat (1), mit einer aktiven Schicht (2), mit einer darüberliegenden Passivierungsschicht (3) und mit einem Gehäuse (5), bei der wenigstens eine elektrisch leitende Schutzschicht (4, 4a) vorgesehen ist, die mit einer in der aktiven Schicht (2) liegenden Schaltungsanordnung (6) an mindestens einer Stelle elektrisch leitend verbunden ist, dadurch gekennzeichnet, dass die Schutzschicht (4, 4a) als Äquipotentialfläche auf der Passivierungsschicht zumindest oberhalb der aktiven Schicht (2) angeordnet ist und als elektrischer Verbindungsteil in eine Sicherheitslogik einbezogen ist, die die Funktion der zu schützenden Schaltungsanordnung bestimmt.

2. Halbleiterschaltung nach Anspruch 1, dadurch gekennzeichnet, dass mindestens zwei unabhängige, eingangsseitig mit einem Logikgatter (8) verbundene Schutzschichten (4, 4a) vorhanden sind zur Beaufschlagung mit einem für die Funktion der zu schützenden Schaltung wesentlichen Signal.

3. Halbleiterschaltung nach einem der vorhergehenden Ansprüche, dadurch gekennzeichnet, dass durch in der Passivierungsschicht (3) ausgesparte Durchkontaktierungen (K1, K2, K3, K4) zu der/den Schutzschichten (4, 4a) geometrisch in der Weise angeordnet sind, dass eine unabhängige externe Kontaktierung einer einzigen Durchkontaktierung, beispielsweise mit einer Sonde, verhindert wird.

## Claims

1. Monolithic integrated semi-conductor circuit comprising a silicon substrate (1), an active layer (2), a passivation layer (3) situated thereon and an envelope (5), in which circuit at least one electrically conducting protective layer (4, 4a) is provided which is connected in an electrically conducting manner at at least one point to a circuit arrangement (6) situated in the active layer (2), characterized in that the protective layer (4, 4a) is arranged as an equipotential surface on the passivation layer at least above the active layer (2) and is included as an electrical connection section in a security logic circuit which governs the operation of the circuit arrangement to be protected.

2. Semi-conductor circuit according to one of claims (sic) 1, characterized in that at least two independent protective layers (4, 4a) are present which are connected on the input side to a logic gate (8) and to which a signal which is essential for operating the circuit to be protected has to be applied.

3. Semi-conductor circuit according to one of the preceding claims, characterized in that vias (K1, K2, K3, k4) to the protective layer(s) (4, 4a) which are recessed in the passivation layer (3) are arranged geometrically in a manner such that an independent external contact to a single via, for example with a probe, is prevented.

## Revendications

1. Circuit intégré monolithique à semiconducteurs comportant un substrat en silicium (1), une couche active (2), une couche de passivation (3) située sur la couche précédente et un boîtier (5), et dans lequel il est prévu au moins une couche protectrice, électriquement conductrice (4, 4a), qui est reliée d'une manière électriquement conductrice, au moins en un emplacement, à un montage (6) situé dans la couche active (2), caractérisé par le fait que la couche protectrice (4, 4a) est disposée, en tant que surface équipotentielle, sur la couche de passivation, au moins audessus de la couche active (2) et est insérée, en tant qu'élément de liaison électrique, dans un circuit logique de sécurité, qui détermine le fonctionnement du montage devant être protégé.

2. Circuit à semiconducteurs suivant la revendication 1, caractérisé par le fait qu'il est prévu au moins deux couches protectrices (4, 4a), reliées, côté entrée, à une porte logique (8) et servant à appliquer un signal essentiel pour le fonctionnement du circuit devant être protégé.

3. Circuit à semiconducteurs suivant l'une des revendications précédentes, caractérisé par le fait que des contacts traversants (K1, K2, K3, K4) formés à travers la couche de passivation (3) sont disposés, du point de vue géométrique, par rapport à la/aux couches protectrices (4, 4a), de manière à empêcher un contact externe indépendant d'un seul contact traversant, par exemple avec une sonde.

## FIG 1

## FIG 2

## FIG 3

## FIG 4